(19) Europäisches Patentamt
European Patent Office
Office européen des brevets

(11) Publication number: **0 153 586**
**B1**

(12) **EUROPEAN PATENT SPECIFICATION**

(45) Date of publication of patent specification: **07.01.88**

(51) Int. Cl.$^4$: **C 25 B 11/04**

(21) Application number: **85100721.1**

(22) Date of filing: **24.01.85**

(54) **Electrode for electrolysis.**

(30) Priority: **31.01.84 JP 15593/84**

(43) Date of publication of application:
**04.09.85 Bulletin 85/36**

(45) Publication of the grant of the patent:
**07.01.88 Bulletin 88/01**

(84) Designated Contracting States:
**DE FR GB**

(56) References cited:
**EP-A-0 121 694**
**DE-A-2 419 021**
**DE-A-2 625 820**
**FR-A-2 344 644**
**FR-A-2 504 559**
**US-A-3 793 164**

(73) Proprietor: **TDK CORPORATION**
**13-1, Nihonbashi 1-chome**
**Chuo-ku Tokyo 103 (JP)**

(72) Inventor: **Ohe, Kazuhide c/o TDK Corporation**
**13-1, Nihonbashi 1-chome**
**Chuo-ku Tokyo (JP)**
Inventor: **Kawashima, Yukio c/o TDK Corporation**
**13-1, Nihonbashi 1-chome**
**Chuo-ku Tokyo (JP)**

(74) Representative: **Wey, Hans-Heinrich, Dipl.-Ing. et al**
**Patentanwälte Müller-Börner & Wey**
**Widenmayerstrasse 49**
**D-8000 München 22 (DE)**

**EP 0 153 586 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

This invention relates to electrodes for use in electrolysis, comprising an electroconductive substrate provided over at least a portion of its outer surface with a coating of a platinum group metal oxide catalyst comprising ruthenium oxide, tin oxide, iridium oxide and optionally also antimony oxide.

Ruthenium oxide ($RuO_2$) type electrodes are well-known anodes for use in the electrolysis of aqueous alkali metal salt solutions, typically brine electrolysis. A typical example of the ruthenium dioxide type electrodes is disclosed in the Japanese Patent Publication No. 46-21884 as comprising a valve metal substrate having a coating of $(Ru\text{-}Ti)O_2$ solid solution applied thereon. Because of its extended lifetime, this electrode has been commercially utilized as a typical metal electrode. Unfortunately, it provides a low anodic current efficiency while evolving a great volume of oxygen.

The Japanese Patent Publication No. 50-11330 discloses another electrode having a coating of $(Ru\text{-}Sn)O_2$ solid solution containing at least 50 mol% of $SnO_2$. This electrode also has an extended lifetime. Contents of $RuO_2$ of the order of 30 mol% provide sufficient chlorine overvoltage, but at the same time lead to some disadvantages including low oxygen overvoltage, increased oxygen evolution, and low current efficiency.

In order to increase oxygen overvoltage in these coating compositions the content of $RuO_2$ activator should be reduced to about 20 mol%. However this is inacceptable because chlorine overvoltage is correspondingly increased.

The Japanese Patent Application No. 52-28106 or U.S. Patent No. 3,776,834 discloses another electrode having a coating of $(Ru\text{-}Sn\text{-}Ti)O_2$ solid solution composed of 14 to 20 mol% of $RuO_2$, 67 to 71 mol% of $TiO_2$, and 9 to 19 mol% of $SnO_2$. The coating composition is proposed in order to improve the oxygen overvoltage and hence, the current efficiency of $(Ru\text{-}Ti)O_2$ solid solution coated electrode. This electrode is described as successful in reducing oxygen evolution by about 20% as compared with the previous $(Ru\text{-}Ti)O_2$ coated electrode. It is still unsatisfactory with respect to oxygen evolution and current efficiency.

An electrode of the type given above is known from the not pre-published earlier European Application EP—A—0 121 694. The coating of this electrode consists of 2 to 45 mol% $RuO_2$, 2 to 45 mol% $IrO_2$ and 10 to 96 mol% $SnO_2$. The coating composition is proposed in order to improve the lifetime of the coating starting from known compositions of the coating comprising at mixtures of platinum metal oxide.

The US—A—3 793 164 and the DE—A—2 419 021 discloses a coating of 30 to 90 per cent by a weight $SnO_2$, 1 to 10 per cent antimony oxide, 1.0 to 50 percent of at least one platinum group metal oxide and as critical component 0.5 to 30 per cent of a valve metal oxide selected from a group consisting of titanium and tantalum oxides. This coating composition is proposed in order to improve the anode lifetime but it is still unsatisfactory with respect to oxygen overvoltage and current efficiency.

Summary of the invention

It is, therefore, the object of the present invention to provide an electrode of the type given above which can provide increased oxygen overvoltage, reduced oxygen evolution, and improved anodic current efficiency while taking advantage of the lifetime and chlorine overvoltage of $(Ru\text{-}Sn)O_2$ solid solution-coated electrodes.

According to a first aspect of the present invention there is provided an electrode with a coating which comprises

(i) 3 to 45 mol% of ruthenium oxide,

(ii) 0.1 to 30 mol% of metallic platinum; platinum oxide; metallic platinum plus iridium oxide; or platinum oxide plus iridium oxide, and

(iii) 50 to 96.9 mol% of tin oxide.

According to a second aspect of the present invention there is provided an electrode having a coating comprising

(i) 3 to 45 mol% of ruthenium oxide,

(ii) 0.1 to 30 mol% of metallic platinum; platinum oxide; metallic platinum plus iridium oxide; or platinum oxide plus iridium oxide, and

(iii) 50 to 96.9 mol% of tin oxide with antimony substituting for not more than 10 mol% of the tin.

The electrodes having the coatings according to the invention provide increased oxygen overvoltage, reduced oxygen evolution and improved anodic current efficiency compared to the prior art electrodes while taking advantage of the lifetime and chlorine overvoltage of $(Ru\text{-}Sn)O_2$ solid solution-coated electrodes.

Brief description of the drawing

Fig. 1 is a diagram showing how the content of oxygen in evolving anode gas varies with active chlorine concentration when brine is electrolyzed in a membrane type chlorine cell with anodes of sample Nos. 1 and 8.

Detailed description of the invention

The electroconductive substrates from which the electrodes of the present invention are formed may

be selected from valve metals such as titanium, tantalum, zirconium, and niobium, and alloys thereof with titanium being preferred. The substrate will considerably vary in shape and size depending on the intended application, but may preferably be in the form of a rod or plate of the appropriate material.

The electroconductive substrates are provided with coatings comprising (i) 3 to 45 mol% of ruthenium oxide, (ii) 0.1 to 30 mol% of metallic platinum and/or platinum oxide and optionally iridium oxide, and (iii) 50 to 96.9 mol% of tin oxide.

The coating contains (i) 3 to 45 mol% of ruthenium oxide generally in the form of $RuO_2$. With contents of $RuO_2$ of less than 3 mol%, the chlorine overvoltage increases beyond the commercially acceptable level. Contents of $RuO_2$ of more than 45 mol% result in reduced oxygen overvoltage increased oxygen evolution, and deteriorated current efficiency. Better results are obtained when the $RuO_2$ content ranges from 10 to 30 mol%.

The coating contains (ii) 0.1 to 30 mol% of at least one member selected from metallic platinum, platinum oxide, and iridium oxide. Contents of component (ii) of less than 0.1 mol% result in increased chlorine overvoltage, reduced oxygen overvoltage or increased oxygen evolution, and deteriorated current efficiency. Better results are obtained when the content of component (ii) ranges from 5 to 15 mol%.

Component (ii) may be one or two or three members selected from the group consisting of metallic platinum, platinum oxide, and iridium oxide. Under usual preparation conditions, platinum and iridium are present as Pt and $IrO_2$, respectively. Thus, component (ii) is generally present in the form of Pt; or Pt+$IrO_2$. As the case may be, a trace amount of platinum oxide is contained in addition thereto. The ratio of Pt to $IrO_2$ is not particularly limited.

The coating further contains (iii) 50 to 96.9 mol% of tin oxide generally in the form of $SnO_2$. Contents of $SnO_2$ of less than 50 mol% result in reduced oxygen overvoltage, increased oxygen evolution, and deteriorated current efficiency. With contents of $SnO_2$ of more than 96.9 mol%, the chlorine overvoltage increases beyond the acceptable level. Better results are obtained when the $SnO_2$ content ranges from 55 to 85 mol%.

According to the second aspect of the present invention, component (iii), that is, $SnO_2$ may contain or be partially replaced by antimony (Sb) in an amount of not more than 10 mol% and preferably not more than 5 mol% of the tin (Sn).

Antimony Sb partially substitutes for $SnO_2$ as a dopant in the form of $Sb_2O_3$ and serves to increase conductivity. Substituting amounts of more than 10 mol% rather detract from the doping effect and deteriorate corrosion resistance.

It should be noted that $RuO_2$, $SnO_2$, and $IrO_2$, and optionally platinum oxide, form a solid solution in the coating. When metallic platinum (Pt) is present, it generally adjoins the solid solution with the intervening grain boundary.

The coating may generally be about 0.5 to 10 μm thick.

The electrodes of the present invention may be prepared by a process as will be described hereinafter.

In order to introduce ruthenium oxide into the coating, a solution of a compound thermally decomposable into ruthenium oxide, for example, $RuCl_3 \cdot 3H_2O$ in a suitable solvent may be applied as by coating followed by drying and baking.

In order to introduce metallic platinum or platinum oxide into the coating, a solution of a salt thermally decomposable into metallic platinum or platinum oxide, for example, a haloplatinic acid such as hexachloroplatinic acid $H_2PtCl_6 \cdot 6H_2O$ in a suitable solvent may be applied as by coating on a titanium substrate followed by drying and baking.

In order to introduce iridium oxide into the coating, a solution of a compound thermally decomposable into iridium oxide, for example, hexachloroiridic acid $H_2IrCl_6 \cdot 6H_2O$ or iridium chloride $IrCl_6 \cdot H_2O$ in a suitable solvent may be applied as by coating on a titanium substrate followed by drying and baking.

In order to introduce tin oxide, optionally doped with antimony, into the coating, a solution of a salt thermally decomposable into tin oxide, for example, stannous halides such as stannous chloride and stannous compounds such as salts with carboxylic acids (e.g. octanoic acid), phosphonic acid, phosphocarboxylic acid, etc. and optionally, a salt thermally decomposable into antimony oxide, for example, antimony halides such as antimony chloride in a suitable solvent may be applied as by coating followed by drying and baking.

In order that the substrate be provided with a coating comprised of components (i), (ii), and (iii) in the specific proportion, the above-mentioned solutions of the respective components may be individually applied to the substrate surface one after another with the intervening drying and baking step. At least two of the above-mentioned solutions may be combined in this multilayer coating process.

Alternatively, a single coating solution may be prepared by combining three or four of the above-mentioned solutions of the respective components and then applied to the substrate surface. The way of applying the coating to the substrate surface is not limited to these procedures or not critical to the present invention, and any desired procedure may be used.

It is to be noted that since antimony trichloride used as the dopant to tin oxide undergoes a substantial loss due volatilization during its baking to the substrate as will be explained below, it may be added to the coating solution in an amount greater by some factors than the stoichiometric amount corresponding to the final doping level.

The electrodes of the present invention are useful as anodes in the electrolysis of alkali metal salts such as soda electrolysis.

According to the present invention, a predetermined amount of at least one member selected from Pt, platinum oxide, and Pt or platinum oxide plus $IrO_2$ is added to a coating of the $(Ru\text{-}Sn)O_2$ solid solution type to provide a novel and improved coating which is characterized by high oxygen overvoltage, reduced oxygen evolution, and high anodic current efficiency. It is also characterized by low chlorine overvoltage and has a long lifetime. The present invention thus provides a commercially satisfactory electrode of the $RuO_2$ solid solution type.

It should be noted that the addition of platinum group metals other than platinum and iridium, for example, Pd to coating compositions of the $(Ru\text{-}Sn)O_2$ said solution type is not successful in improving corrosion resistance.

Examples of the present invention are given below by way of illustration and not by way of limitation.

Example 1

The starting materials used were

$RuCl_3 \cdot 3H_2O$,
$H_2PtCl_6 \cdot 6H_2O$,
$H_2IrCl_6 \cdot 6H_2O$,
$C_{16}H_{30}O_4Sn$, and
$SbCl_3$.

These starting materials for Ru, Pt, Ir, and Sn or Sn+Sb were respectively dissolved in butanol to a concentration of 100 grams of metal per liter to form stock solutions. The Sn+Sb solution was prepared by adding 5 mol% of $SbCl_3$ to $C_{16}H_{30}O_4Sn$.

The stock solutions were mixed and agitated in predetermined ratios by taking the respective solutions by means of measuring pipets, obtaining coating solutions containing the respective components in different ratios.

Separately, titanium plates of 5×20×1 mm thick were washed with a hot solution of oxalic acid in water. The above-prepared solutions were applied to one major surface of the cleaned plates by brushing, followed by drying and firing in air at 500°C for 10 minutes in a furnace for thermal decomposition. This brushing, drying, and baking procedure was repeated four times until the titanium plates were formed with coatings having the compositions shown in Table 1.

These samples were made anodes and measured for polarization by the potential sweep method at a sweep rate of 240 sec/volt.

Upon measurement, lead wires were connected to the uncoated surface of the samples using Dotite (trademark) and the samples except their effective area were sealed with an insulating paint.

The samples were also measured for chlorine overvoltage $\eta Cl_2$ and oxygen overvoltage $\eta O_2$ in a 30 wt% NaCl aqueous solution (adjusted to pH 1) and a 1 mole $H_2SO_4$ aqueous solution both at 30°C and a current density of 20 $mA/cm^2$.

The results are shown in Table 1 together with oxygen content ($O_2$ vol%).

For those electrodes whose chlorine overvoltage $\eta Cl_2$ exceeds the commercially acceptable level of 100 millivolts, the percentage oxygen evolution was not measured.

The composition of the coatings shown in Table 1 was determined by fluorescent x-ray analysis.

TABLE 1

| Sample No. | Composition (mol%) Ru | Pt | Ir | Sn | Sb** | $\eta O_2$ (mV) | $\eta Cl_2$ (mV) | $O_2$% |
|---|---|---|---|---|---|---|---|---|
| 1 | 20 | 10 | — | 70 | — | 410 | 55 | 0.5 |
| 2 | 20 | 10 | — | 70 | (2) | 410 | 55 | 0.5 |
| 3 | 20 | 7 | 3 | 70 | — | 480 | 65 | 0.5 |
| 4 | 20 | 7 | 3 | 70 | (2) | 480 | 60 | 0.5 |
| 5* | 20 | — | 10 | 70 | — | 450 | 75 | 0.5 |
| 6* | 20 | — | 10 | 70 | (2) | 440 | 75 | 0.5 |
| 7* | 20 | — | — | 80 | — | 450 | 120 | — |
| 8* | 30 | — | — | 70 | — | 350 | 60 | 2.0 |
| 9* | — | — | 20 | 80 | — | 380 | 120 | — |

* Comparative Examples.
** Antimony Sb content is expressed in mol% based on the tin.

As evident from the data of Table 1, the electrodes of Ru-Sn-Pt (and/or Ir) system according to the present invention exhibit a high oxygen overvoltage while suppressing the chlorine overvoltage and oxygen evolution.

In Fig. 1, the oxygen content (expressed in vol%) in evolving anode gas is plotted with respect to the varying active chlorine concentration (expressed in millimole) during electrolysis of brine (2.5 M NaCl) in an ion-exchange membrane type laboratory cell at a temperature of 55°C and a current density of 20 A/dm$^2$. As compared with the curve of sample No. 8, the curve of sample No. 1 shows that the electrode of the present invention is more effective in suppressing the oxygen content of evolving chlorine gas.

Example 2

Electrodes (anodes) having coatings of the compositions shown in Table 2 were prepared in the same manner as in Example 1 and determined for chlorine generation efficiency and wear resistance.

The chlorine generation efficiency was measured by placing an anode sample and a cathode in the form of a SUS 304 disc having a diameter of 30 mm in an electrolytic solution containing 0.25 moles of sodium chloride in 150 ml of water in a sealed tank. Electrolysis was carried out at a temperature of 30°C, a current density of 20 A/dm$^2$, and an electricity quantity of 100 coulombs. Thereafter, the solution was transferred into an iodine flask where iodometric titration with sodium thiosulfate was conducted to determine the concentration of hypochlorite in the solution.

The wear test was an accelerated wear test according to Vaaler's method (J. Electrochem. Soc., *117*, 219 (1970)). Illustratively, in a chlorine saturated solution containing 0.5 moles of NaCl and 2 moles of $NaClO_4$ at 65°C and pH 3, electrolysis was conducted at a current density of 100 A/dm$^2$. The test was continued until the bath voltage reached 4 volts. The number of hours of successful operation until the anode had passivated is recorded as the lifetime of the anode.

Symbols used in Table 2 have the following meanings.

| Symbols | Lifetime |
|---|---|
| ◎ | more than 2500 hours |
| ○ | 1500 to 2500 hours |
| △ | 500 to 1500 hours |
| X | less than 500 hours. |

Our experience indicates that this test accelerates passivation about 15 to 20 times higher than normal operation in a commercial chlorine cell.

TABLE 2

| Sample No. | Composition (mol%) Ru | Pt | Ir | Sn | Sb** | Cl Generation efficiency | Lifetime |
|---|---|---|---|---|---|---|---|
| 1 | 20 | 10 | — | 70 | — | 85 | ◎ |
| 2 | 20 | 10 | — | 70 | (2) | 86 | ◎ |
| 3 | 20 | 7 | 3 | 70 | — | 88 | ◎ |
| 4 | 20 | 7 | 3 | 70 | (2) | 88 | ◎ |
| 5* | 20 | — | 10 | 70 | — | 82 | ◎ |
| 6* | 20 | — | 10 | 70 | (2) | 84 | ◎ |
| 7* | 20 | — | — | 80 | — | 74 | △ |
| 8* | 30 | — | — | 70 | — | 77 | ○ |
| 9* | — | — | 20 | 80 | — | 70 | ◎ |
| 10* | 20 | — | 3 | 77 | — | 83 | ◎ |
| 11 | 20 | 3 | — | 77 | — | 82 | ◎ |
| 12* | — | 20 | — | 80 | — | 65 | X |
| 13* | — | 14 | 6 | 80 | — | 75 | ○ |

* Comparative Examples.
** Antimony Sb content is expressed in mol% based on the tin.

The data in Table 2 shows that the electrodes of the present invention are highly efficient in evolving chlorine during an extended lifetime.

**Claims**

1. An electrode for use in electrolysis, comprising an electroconductive substrate provided over at least a portion of its outer surface with a coating of a platinum group metal oxide catalyst comprising ruthenium oxide, tin oxide and iridium oxide, characterized in that said coating comprises

(i) 3 to 45 mol% of ruthenium oxide,

(ii) 0.1 to 30 mol% of metallic platinum; platinum oxide; metallic platinum plus iridium oxide; or platinum oxide plus iridium oxide, and

(iii) 50 to 96.9 mol% of tin oxide.

2. The electrode of claim 1 wherein said coating comprises

3 to 45 mol% of ruthenium oxide,

5 to 15 mol% of metallic platinum; platinum oxide; metallic platinum plus iridium oxide; or platinum oxide plus iridium oxide, and

55 to 85 mol% of tin oxide.

3. The electrode of claim 1 wherein said coating comprises

10 to 30 mol% of ruthenium oxide,

5 to 15 mol% of metallic platinum; platinum oxide; metallic platinum plus iridium oxide; or platinum oxide plus iridium oxide, and

55 to 85 mol% of tin oxide.

4. The electrode of claim 1 wherein said substrate is selected from valve metals and alloys thereof.

5. The electrode of claim 1 wherein component (ii) is metallic platinum.

6. The electrode of claim 1 wherein component (ii) is metallic platinum plus iridium oxide.

7. An electrode for use in electrolysis, comprising an electroconductive substrate provided over at least a portion of its outer surface with a coating of a platinum group metal oxide catalyst comprising ruthenium oxide, tin oxide, iridium oxide and antimony oxide, characterized in that said coating comprises

(i) 3 to 45 mol% of ruthenium oxide,

(ii) 0.1 to 30 mol% of metallic platinum; platinum oxide; metallic platinum plus iridium oxide; or platinum oxide plus iridium oxide, and

(iii) 50 to 96.9 mol% of tin oxide with antimony substituting for not more than 10 mol% of the tin.

8. The electrode of claim 7 wherein said coating comprises

3 to 45 mol% of ruthenium oxide,

5 to 15 mol% of metallic platinum; platinum oxide; metallic platinum plus iridium oxide; or platinum oxide plus iridium oxide, and

55 to 85 mol% of tin oxide with antimony substituting for not more than 10 mol% of the tin.

9. The electrode of claim 8 wherein said coating comprises

10 to 30 mol% of ruthenium oxide,

5 to 15 mol% of metallic platinum; platinum oxide; metallic platinum plus iridium oxide; or platinum oxide plus iridium oxide, and

55 to 85 mol% of tin oxide with antimony substituting for not more than 10 mol% of the tin.

10. The electrode of claim 7 wherein said substrate is selected from valve metals and alloys thereof.

11. The electrode of claim 7 wherein component (ii) is metallic platinum.

12. The electrode of claim 7 wherein component (ii) is metallic platinum plus iridium oxide.

13. The electrode of claim 7 wherein the antimony substitutes for not more than 5 mol% of the tin.

## Patentansprüche

1. Elektrode zur Verwendung in der Elektrolyse, bestehend aus einem elektrisch leitenden Substrat, das über wenigstens einen Teil seiner äußeren Oberfläche mit einem Überzug aus einem Metalloxidkatalysator der Platingruppe versehen ist, der Rutheniumoxid, Zinnoxid und Iridiumoxid umfaßt, dadurch gekennzeichnet, daß der Überzug aus

(I) 3 bis 45 mol% Rutheniumoxid;

(II) 0,1 bis 30 mol% metallischem Platin, Platinoxid, metallischem Platin plus Iridiumoxid oder Platinoxid plus Iridiumoxid und

(III) 50 bis 96,9 mol% Zinnoxid besteht.

2. Elektrode nach Anspruch 1, dadurch gekennzeichnet, daß der Überzug aus

3 bis 45 mol% Rutheniumoxid;

5 bis 15 mol% metallischem Platin, Platinoxid, metallischem Platin plus Iridiumoxid oder Platinoxid plus Iridiumoxid und

55 bis 85 mol% Zinnoxid besteht.

3. Elektrode nach Anspruch 1, dadurch gekennzeichnet, daß der Überzug aus

10 bis 30 mol% Rutheniumoxid;

5 bis 15 mol% metallischem Platin, Platinoxid, metallischem Platin plus Iridiumoxid oder Platinoxid plus Iridiumoxid und

55 bis 85 mol% Zinnoxid besteht.

4. Elektrode nach Anspruch 1, dadurch gekennzeichnet, daß das Substrat aus Metallen mit Sperrwirkung und Legierungen derselben ausgewählt ist.

5. Elektrode nach Anspruch 1, dadurch gekennzeichnet, daß der Bestandteil (II) metallisches Platin ist.

6. Elektrode nach Anspruch 1, dadurch gekennzeichnet, daß der Bestandteil (II) metallisches Platin plus Iridiumoxid ist.

7. Elektrode zur Verwendung in der Elektrolyse, bestehend aus einem elektrischen leitenden Substrat, das über wenigstens einen Teil seiner äußeren Oberfläche mit einem Überzug aus einem Metalloxidkatalysator der Platingruppe versehen ist, der Rutheniumoxid, Zinnoxid, Iridiumoxid und Antimonoxid umfaßt, dadurch gekennzeichnet, daß der Überzug aus

(I) 3 bis 45 mol% Rutheniumoxid;

(II) 0,1 bis 30 mol% metallischem Platin, Platinoxid, metallischem Platin plus Iridiumoxid oder Platinoxid plus Iridiumoxid und

(III) 50 bis 96,9 mol% Zinnoxid besteht, wobei nicht mehr als 10 mol% des Zinns durch Antimon substituiert sind.

8. Elektrode nach Anspruch 7, dadurch gekennzeichnet, daß der Überzug aus

3 bis 45 mol% Rutheniumoxid;

5 bis 15 mol% metallischem Platin, Platinoxid, metallischem Platin plus Iridiumoxid oder Platinoxid plus Iridiumoxid und

55 bis 85 mol% Zinnoxid besteht, wobei nicht mehr als 10 mol% des Zinns durch Antimon substituiert sind.

9. Elektrode nach Anspruch 8, dadurch gekennzeichnet, daß der Überzug aus

10 bis 30 mol-% Rutheniumoxid;

5 bis 15 mol% metallischem Platin, Platinoxid, metallischem Platin plus Iridiumoxid oder Platinoxid plus Iridiumoxid und

55 bis 85 mol% Zinnoxid besteht, wobei nicht mehr als 10 mol% des Zinns durch Antimon substituiert sind.

10. Elektrode nach Anspruch 7, dadurch gekennzeichnet, daß das Substrat aus Metallen mit Sperrwirkung und Legierungen derselben ausgewählt ist.

11. Elektrode nach Anspruch 7, dadurch gekennzeichnet, daß der Bestandteil (II) metallisches Platin ist.

12. Elektrode nach Anspruch 7, dadurch gekennzeichnet, daß der Bestandteil (II) metallisches Platin plus Iridiumoxid ist.

13. Elektrode nach Anspruch 7, dadurch gekennzeichnet, daß nicht mehr als 5 mol% des Zinns durch Antimon substituiert sind.

**Revendications**

1. Une électrode utilisable dans l'électrolyse, comprenant un substrat éléctroconducteur disposé sur au moins une portion de sa surface extérieure avec un revêtement d'un catalyseur à oxyde de métal du groupe du platine comprenant l'oxyde de ruthénium, l'oxyde d'étain et l'oxyde d'iridium, caractérisée en ce que ledit revêtement comprend

(i) 3 à 45% molaires d'oxyde de ruthénium,

(ii) 0,1 à 30% molaires de platine métallique; d'oxyde de platine; de platine métallique plus oxyde d'iridium; ou d'oxyde de platine plus oxyde d'iridium, et

(iii) 50 à 96,9% molaires d'oxyde d'étain.

2. L'électrode de la revendication 1 dans laquelle ledit revêtement comprend

3 à 45% molaires d'oxyde de ruthénium,

5 à 15% molaires de platine métallique; d'oxyde de platine; de platine métallique plus oxyde d'iridium; ou d'oxyde de platine plus oxyde d'iridium, et

55 à 85% molaires d'oxyde d'étain.

3. L'électrode de la revendication 1 dans laquelle ledit revêtement comprend

10 à 30% molaires d'oxyde de ruthénium

5 à 15% molaires de platine métallique; d'oxyde de platine; de platine métallique plus oxyde d'iridium; ou d'oxyde de platine plus oxyde d'iridium, et

55 à 85% molaires d'oxyde d'étain.

4. L'électrode de la revendication 1 dans laquelle ledit substrat est choisi parmi les métaux de type redresseurs et leurs alliages.

5. L'électrode de la revendication 1 dans laquelle le composant (ii) est du platine métallique.

6. L'électrode de la revendication 1 dans laquelle le composant (ii) est du platine métallique plus oxyde d'iridium.

7. Une électrode utilisable dans l'électrolyse, comprenant un substrat électroconducteur disposé sur au moins une portion de sa surface extérieure avec un revêtement d'un catalyseur à oxyde de métal du groupe du platine comprenant l'oxyde de ruthénium, l'oxyde d'étain, l'oxyde d'iridium et l'oxyde d'antimoine, caractérisée en ce que ledit revêtement comprend

(i) 3 à 45% molaires d'oxyde de ruthénium,

(ii) 0,1 à 30% molaires de platine métallique; d'oxyde de platine, de platine métallique plus oxyde d'iridium; ou d'oxyde de platine plus oxyde d'iridium,

(iii) 50 à 96,9% molaires d'oxyde d'étain avec de l'antimoine remplaçant au plus 10% molaires de l'étain.

8. L'électrode de la revendication 7 dans laquelle ledit revêtement comprend

3 à 45% molaires d'oxyde de ruthénium,

5 à 15% molaires de platine métallique; d'oxyde de platine; de platine métallique plus oxyde d'iridium; ou d'oxyde de platine plus oxyde d'iridium, et

55 à 85% molaires d'oxyde d'étain avec de l'antimoine remplaçant au plus 10% molaires de l'étain.

9. L'électrode de la revendication 8 dans laquelle ledit revêtement comprend

10 à 30% molaires d'oxyde de ruthénium,

5 à 15% molaires de platine métallique; d'oxyde de platine de platine métallique plus oxyde d'iridium; ou d'oxyde de platine plus oxyde d'iridium, et

55 à 85% molaires d'oxyde d'étain avec de l'antimoine remplaçant au plus 10% molaires de l'étain.

10. L'électrode de la revendication 7 dans laquelle ledit substrat est choisi parmi les métaux de type redresseurs et leurs alliages.

11. L'électrode de la revendication 7 dans laquelle le composant (ii) est le platine métallique.

12. L'électrode de la revendication 7, dans laquelle le composant (ii) est le platine métallique plus oxyde d'iridium.

13. L'éléctrode de la revendication 7, dans laquelle l'antimoine remplace au plus 5% molaires de l'étain.

FIG. 1

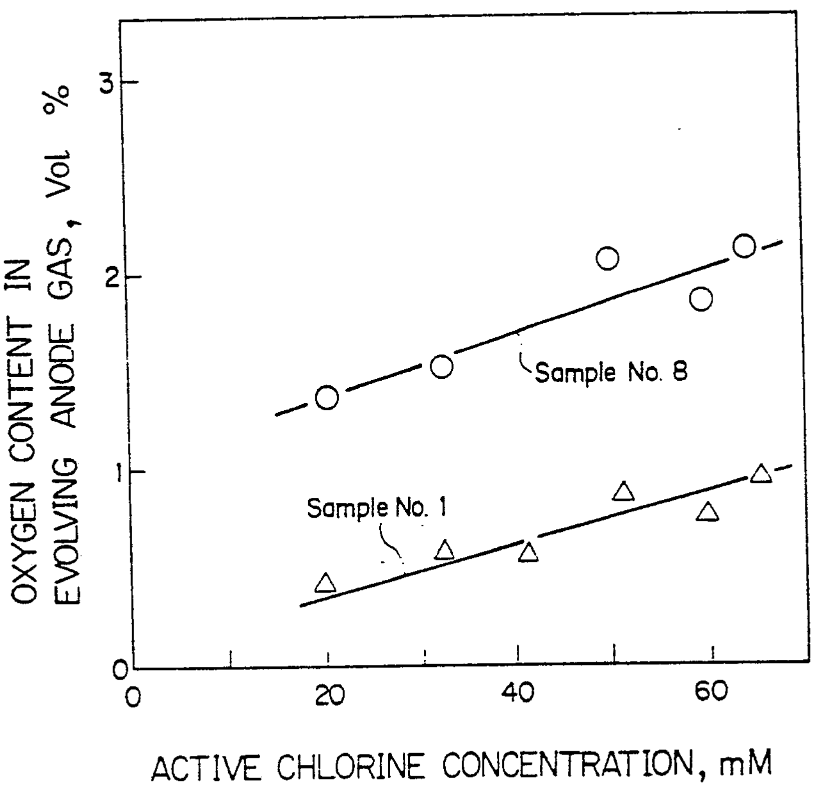
OXYGEN CONTENT IN EVOLVING ANODE GAS, Vol %
0
1
2
3
0
20
40
60
Sample No. 8
Sample No. 1
ACTIVE CHLORINE CONCENTRATION, mM